# EUROPEAN PATENT SPECIFICATION

(11) **EP 2 998 189 B1**
(45) Date of publication and mention of the grant of the patent: **24.07.2019**
(21) Application number: 15183516.2
(22) Date of filing: 02.09.2015
(51) Int. Cl.: B62B 5/02, B62B 3/06

(54) **A FORKLIFT TRUCK**
GABELHUBWAGEN
CHARIOT ELEVATEUR A FOURCHE

(30) Priority: 19.09.2014 SE 1451101
(43) Date of publication of application: 23.03.2016
(73) Proprietor: Toyota Material Handling Manufacturing Sweden AB, 595 81 MJÖLBY (SE)
(72) Inventor: TENGVERT, Peter, 591 52 Motala (SE); PERSSON, Claes, 589 51 Linköping (SE)
(74) Representative: Zacco Sweden AB

(56) References cited:
- EP-A2- 2 020 358
- DE-A1-102006 035 822
- DE-A1-102009 004 403
- JP-Y1- S4 812 937

## Description

### TECHNICAL FIELD

The present invention relates to a forklift truck according to the preamble of claim 1 and a method for climbing an obstacle, according to claim 8 with a forklift truck, and a method of modifying a forklift truck according to claim 10.

### BACKGROUND

Forklift trucks are commonly used to handle loads indoors on flat, even surfaces. However, there are occasions where loads need to be transported on irregular surfaces, for example outdoors in urban environments. Obstacles such as pavements, thresholds, kerbs, doorsteps or similar may thus be encountered and depending on the height/size of the obstacle and the weight of the load, it may be difficult to manoeuvre the forklift truck to roll over the obstacle. This is specifically a problem when the forklift truck is used with the forks encountering the obstacle first. Obstacles of this kind may require extra force from the operator to operate the forklift truck or the operator may have to manually lift the forks of the forklift over the obstacle. An obstacle may even cause the operator to choose a different transport route. This may affect the load being transported on the forklift truck and results in a deterioration of the work environment for the operator. It is thus desirable to achieve a forklift truck, which improves the ability to climb over encountered obstacles.

There are known solutions where the forklift truck comprises single or double fork wheel bogies in order to improve the manoeuvrability of the forklift. A fork wheel bogie typically comprises a wheel arranged on a linkage, which is pivotable relative the fork. A double bogie comprises two wheels where the wheel axles are rigidly connected and the load is thus divided on two axels, which makes it easier to roll the front wheel onto an obstacle. The problem with a double bogie is, however, that when the front wheel has climbed an obstacle all the load is on the rear wheel, which makes it difficult to force the rear wheel over the obstacle.

Some forklifts known in the art comprise a front climber wheel arranged at the tip of each fork in order to handle obstacles. Front wheel climber wheels are particularly useful when entering a pallet from the side, and not through the normal pallet tunnel. The front climber wheel is typically a wheel with a smaller diameter than the fork wheels such that it does not touch the ground and obstruct normal manoeuvring of the forklift truck. A front climber wheel may improve the ability to climb over an obstacle but the operator still has to use a great force to manoeuvre the forklift over the obstacle since the majority of the load is on the fork wheels. Also, mounting a further wheel on the forklift truck means an increased complexity and results in a further element to maintain during the life cycle of the forklift truck.

A known solution comprises fork wheel double bogies where the two fork wheels are arranged laterally offset in a curve shaped member. The curve shaped member rotates when rolling over obstacles in order to improve the manoeuvrability. Such a solution according to the preamble of claim 1 is disclosed in document DE 10 2009004403 A1. This curved shaped member has a disadvantage in that it only gives a minor help to the operator when handling an obstacle. The design also makes it difficult to roll over an obstacle with an angle, which means that there is a risk that the forklift truck turns over when it is loaded.

### SUMMARY OF THE INVENTION

Despite known solutions in the field, there is still a need to develop a forklift with improved ergonomic properties, which improves the ability to climb over obstacles.

An object of the present invention is to achieve a forklift truck with improved ergonomic properties.

Another object of the present invention is to achieve a forklift truck, which can climb over obstacles in an easy way.

A further object of the present invention is to achieve a forklift truck, which is safe and user friendly.

Another object of the present invention is to achieve a method for climbing an obstacle with a forklift truck, which is ergonomic.

Another object of the present invention is to achieve a method for climbing an obstacle with a forklift truck, which is safe and user friendly.

Another object of the present invention is to achieve a method for modifying a forklift truck, such that the forklift truck has improved ergonomic properties, can climb over obstacles in an easy way and is safe and user friendly.

The herein mentioned objects are achieved by a forklift truck according to the characterizing part of claim 1 and a method for climbing an obstacle with a forklift truck according to claim 8, and a method of modifying a forklift truck according to claim 10. Preferred embodiments are defined in the dependent claims.

According to an aspect a forklift truck is provided, comprising at least one fork, wherein the at least one fork is height adjustable between a lowered position and a raised position and wherein a fork wheel bogie is arranged at the front end of the fork, the fork wheel bogie comprising a front wheel and a rear wheel. A slide device is attached to the front wheel, wherein the slide device extends beyond the front wheel and is configured to be able to slide on an encountered obstacle and thereby lift the front wheel onto the obstacle. The slide device is further adapted to act as a lever in cooperation with the fork, such that the rear wheel may be lifted onto an encountered obstacle. By arranging a fork wheel bogie comprising two wheels on the fork, the load on the forklift fork is divided between the two wheels. Since the slide device is attached to the front wheel and extends beyond the front wheel, the front wheel may easily be lifted onto the obstacle when the slide device slides on the obstacle. By the cooperation between the slide device and the fork, the slide device acts as a lever and thus helps lifting the rear wheel onto the obstacle. This way, a forklift truck is achieved, which can climb over obstacles in an easy way and thus is user friendly.

The forklift truck may be a tiller arm truck, including an unpowered hand pallet truck, a hand stacker truck, a tiller arm truck in general or an electric stacker truck or similar, of course any forklift having a fork wheel bogie at the front section of at least one fork could be applicable. A fork is herein defined as a prong.

The fork wheel bogie comprises a linkage, which is pivotable in relation to the fork on which the bogie is arranged. The front wheel axle and the rear wheel axle are suitably connected with each other and the pivotable linkage. The front wheel axle and the rear wheel axle are suitably rigidly connected with each other.

It is assumed that a forklift truck normally is travelling with the fork in the raised position. Thus, when encountering an obstacle, the fork is in the raised position.

The front end of the fork is defined as the end of the fork comprising the tip of the fork. The front wheel is thus defined as the fork wheel arranged closest to the tip of the fork and the rear wheel is defined as the fork wheel arranged behind the front wheel further away from the tip of the fork.

The extension of the slide device is preferably parallel with the extension of the fork when the forklift truck is travelling on an even surface and the front wheel and the rear wheel are on the same level. The slide device is arranged such that it extends beyond the front wheel, in parallel with the fork, in the direction towards the front end of the fork. Thus, when the forklift truck is travelling in a direction with the fork first, the slide device is arranged to encounter an obstacle before the front wheel. When the forklift truck encounters an obstacle and the slide device lifts the front wheel onto the obstacle, the slide device obtains an angled position relative to the fork. The slide device is configured such that it does not touch the surface on which the forklift truck is travelling, when travelling on an even surface.

According to an aspect each slide device is arranged to act as a lever by abutting the underside of the fork whereby the fork, when lowered, exerts a force downwards on a front part of the slide device. The slide device is thus configured such that the front part of the slide device may touch the underside of the fork when the front wheel has been lifted onto an encountered obstacle and the slide device has an angled position in relation to the fork. The force is thus exerted on the front part of the slide device, such that the front part is pressed downwards towards the obstacle. When the front part is pressed downwards by the fork, the slide is rotated around the front wheel axle and the rear wheel is thus lifted since the rear wheel axle is rigidly connected to the front wheel axle. Thus, the fork wheel bogie comprising the slide device is preferably arranged such that the fork extends beyond the slide device when the forklift truck is travelling on a horizontal even surface and the fork is in the raised position, so that the front part of the slide device abuts the underside of the fork when the front wheel is lifted onto an obstacle. The force exerted on the slide device is preferably provided by the load on the fork. If there is no load on the fork, the weight of the fork itself may exert a force on the slide device and thus help lifting the rear wheel. If the fork is too lightweight the force to help lifting the rear wheel may be provided by an auxiliary weight other than a load. However, with no load on the fork, the force required to push the forklift truck over the obstacle will be limited and will thus not be a significant problem for the operator.

In cases where the encountered obstacle is so low, that the slide device does not abut the underside of the fork when the front wheel is lifted onto the obstacle and the fork is in the raised position, the fork may be lowered and may then exert a force on the slide device.

According to an aspect the slide device comprises a first arm and a second arm, arranged on each side of the front wheel. This way, each arm may act as a lever when the forklift truck encounters an obstacle and the leverage from the slide device is increased.

Preferably the first arm and the second arm each has a tapered front part extending beyond the front wheel. The front part of each arm is suitably tapered upwards, in the direction towards the fork. This way, the angled side of the front part of each arm may easily slide on an encountered obstacle.

The first arm and the second arm are preferably attached to the rear wheel, thus connecting the rear wheel and the front wheel. The first arm and the second arm are thus both attached to the front wheel and the rear wheel and constitute the rigid connection between the front wheel axle and the rear wheel axle. Preferably, the front part of the slide device is attached to the front wheel axle and a rear part of the slide device is attached to the rear wheel axle.

According to an aspect a slide plate is arranged between the front part of the first arm and the front part of the second arm. The slide plate is thus arranged in front of the front wheel. The slide plate is suitably arranged on the angled side of the front parts such that the slide plate may slide on an obstacle. By arranging a slide plate between the first arm and the second arm the pressure exerted by the slide device on the obstacle is reduced and the risk of affecting or damaging the obstacle is minimized. The slide plate is preferably exchangeable.

According to an aspect a slide wheel is arranged between the front part of the first arm and the front part of the second arm. The slide wheel is thus arranged in front of the front wheel. The slide wheel is suitably arranged on the angled side of the front parts such that the slide wheel may slide on an obstacle. Alternatively, a slide wheel is arranged between the front part of the first arm and the front part of the second arm as well as at least one slide plate.

According to an aspect the forklift truck comprises two forks, wherein each fork comprises the herein described fork wheel bogie and slide device.

According to an aspect a method for climbing an obstacle with a forklift truck is provided. The forklift truck comprises at least one fork, wherein the at least one fork is height adjustable between a lowered position and a raised position and wherein a fork wheel bogie is arranged at the front end of the fork, the fork wheel bogie comprising a front wheel and a rear wheel. The method comprises the steps to:
- lift the front wheel onto the obstacle by means of a slide device attached to the front wheel, wherein the slide device extends beyond the front wheels such that it slides on the obstacle and thereby lifts the front wheel onto the obstacle; and
- lift the rear wheel onto the obstacle by means of the slide device acting as a lever in cooperation with the fork, such that the rear wheel is lifted onto the obstacle.

The step to lift the rear wheel includes exerting a force downwards on a front part of the slide device by lowering the fork to the lowered position. Since the slide device is attached to the front wheel, and the front wheel axle is rigidly connected to the rear wheel axle, the rear wheel will be lifted when a force is acting downwards on the front part of the slide device.

According to an aspect the method further comprises the step to:
- move the fork to the raised position after the rear wheel has been lifted onto the obstacle.

According to an aspect a method for modifying a forklift truck is provided, the forklift truck comprising at least one fork, wherein the at least one fork is height adjustable between a lowered position and a raised position and wherein a fork wheel bogie is arranged at the front end of the fork, the fork wheel bogie comprising a front wheel and a rear wheel. The method comprises the step of:
- attaching a slide device to the front wheel, wherein the slide device extends beyond the front wheel and is configured to be able to slide on an encountered obstacle such that the front wheel is lifted onto the obstacle, wherein the slide device is adapted to act as a lever in cooperation with the fork, such that the rear wheel may be lifted onto an encountered object.

Further objects, advantages and novel features of the present invention will become apparent to one skilled in the art from the following details, and also by putting the invention into practice.

### BRIEF DESCRIPTION OF THE DRAWINGS

For fuller understanding of the present invention and further objects and advantages of it, the detailed description set out below should be read together with the accompanying drawings, in which the same reference notations denote similar items in the various diagrams, and in which:
- Figure 1: schematically illustrates a forklift truck according to an embodiment of the invention;
- Figure 2: schematically illustrates a forklift truck according to an embodiment of the invention;
- Figure 3: schematically illustrates a fork wheel bogie according to an embodiment of the invention;
- Figure 4: schematically illustrates a fork wheel bogie according to an embodiment of the invention;
- Figure 5: schematically illustrates a fork wheel bogie according to an embodiment of the invention;
- Figure 6: schematically illustrates a sequence of a forklift truck climbing an obstacle according to an embodiment of the invention;
- Figure 7: illustrates a flow chart for a method for climbing an obstacle with a forklift truck according to an embodiment of the invention; and
- Figure 8: illustrates a flow chart for a method for modifying a forklift truck according to an embodiment of the invention.

### DETAILED DESCRIPTION OF THE DRAWINGS

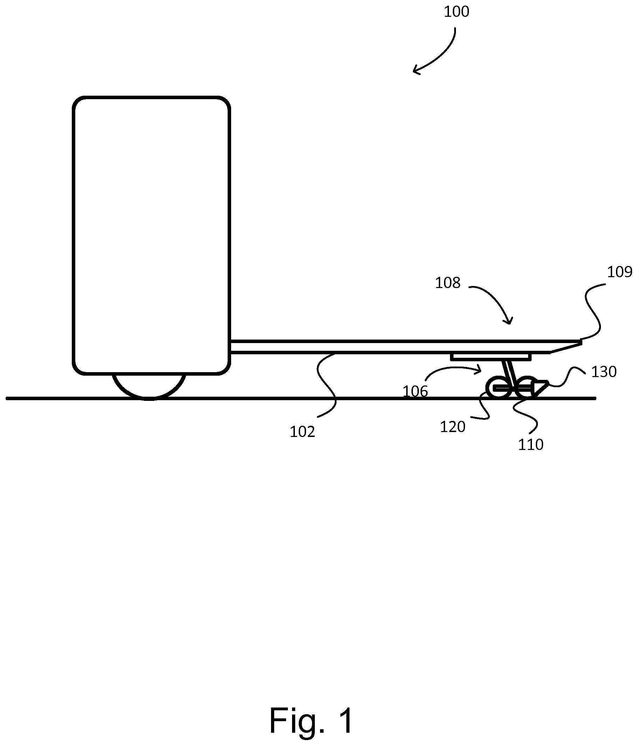

Figure 1 shows a side view of a forklift truck 100 according to an embodiment of the invention. The forklift truck 100 comprises a fork 102, wherein the fork 102 is height adjustable between a lowered position and a raised position and wherein a fork wheel bogie 106 is arranged at the front end 108 of the fork 102, the fork wheel bogie 106 comprising a front wheel 110 and a rear wheel 120. The fork 102 in figure 1 is in the raised position. The fork 102 have a fork tip 109 at the front end 108. A slide device 130 is attached to the front wheel 110, wherein the slide device 130 is configured to be able to slide on an encountered obstacle (not shown) and thereby lift the front wheel 110 onto the obstacle. The slide device 130 is also adapted to act as a lever in cooperation with the fork 102, such that the rear wheel 120 may be lifted onto the encountered obstacle. The forklift truck 100 may be a hand pallet truck, a power pallet truck, a hand stacker truck or an electric stacker truck, a tiller arm truck in general or any forklift truck having a fork wheel bogie at the front section of the fork.

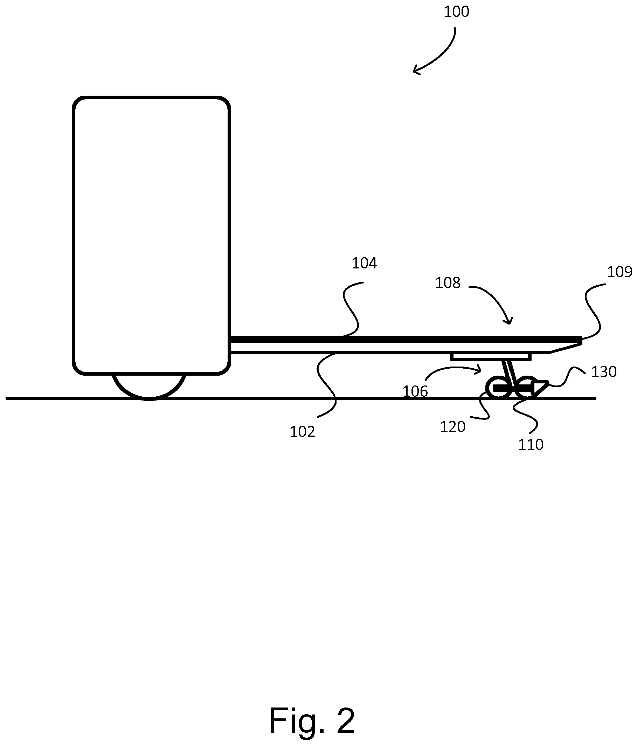

Figure 2 shows a side view of a forklift truck 100 according to an embodiment of the invention. The forklift truck 100 is configured as the forklift truck 100 described in figure 1, with the difference that the forklift truck 100 comprises a first fork 102 and a second fork 104. Only the fork wheel bogie 106 on the first fork 102 is shown in this figure, however, the fork wheel bogie 106 on the second fork 104 is identically configured.

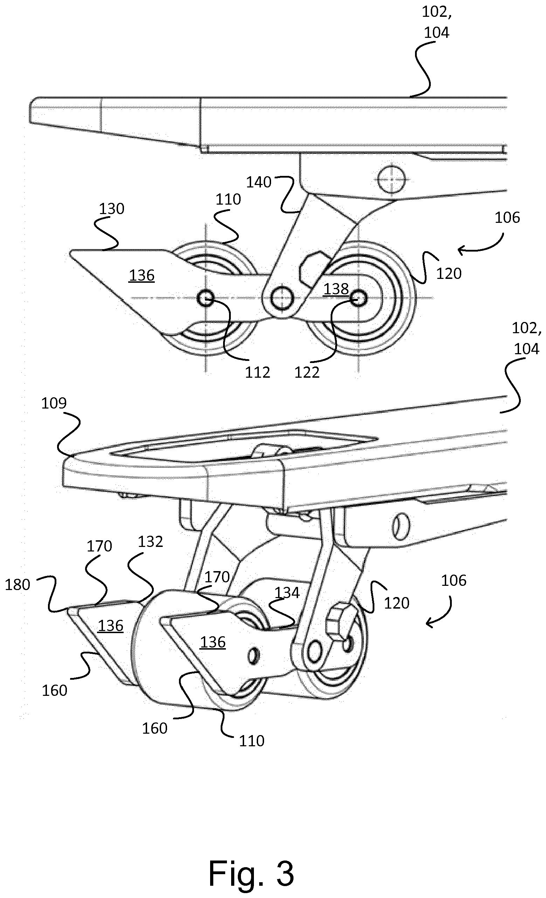

Figure 3 shows two detailed views of a fork 102, 104 on a forklift truck 100, the fork 102, 104 comprising a fork wheel bogie 106 according to an embodiment of the invention. The forklift truck 100 may be configured as described in figure 1 or figure 2. The fork 102, 104 shown in figure 2 may be the first fork 102 or the second fork 104. The fork wheel bogie 106 comprises a linkage 140 attached in one end to the underside of the fork 102, 104, a front wheel 110 and a rear wheel 120. A slide device 130 is attached to the front wheel axle 112 and the rear wheel axle 122, thus rigidly connecting the front wheel 110 and the rear wheel 120. The extension of the slide device 130 is essentially parallel with the extension of the fork 102, 104, when the front wheel 110 and the rear wheel 120 are both on the same level. The fork 102, 104 extends beyond the slide device 130. The linkage 140 is in its other end attached to the slide device 130, between the front wheel 110 and the rear wheel 120. The slide device 130 comprises a first arm 132 and a second arm 134 arranged on each side of the front wheel 110 and the rear wheel 120, perpendicular to the front wheel axle 112 and the rear wheel axle 122. The first arm 132 and the second arm 134 are each attached to the front wheel axle 112 and the rear wheel axle 122. Each arm 132, 134 has a tapered front part 136 extending beyond the front wheel 110 in the direction of the fork tip 109, and a rear part 138 attached to the rear wheel axle 122. The front part 136 is tapered from the bottom upwards towards the fork 102, 104 and thus comprises an angled side 160 and a substantially horizontal upper side 170, which meet in a slide device tip 180. The angled side 160 is adapted for being able to slide on an encountered obstacle (not shown), such that the front wheel 110 is lifted onto the obstacle. The slide device 130 is preferably made of steel, but could be made of for example hardened plastic or other suitable materials.

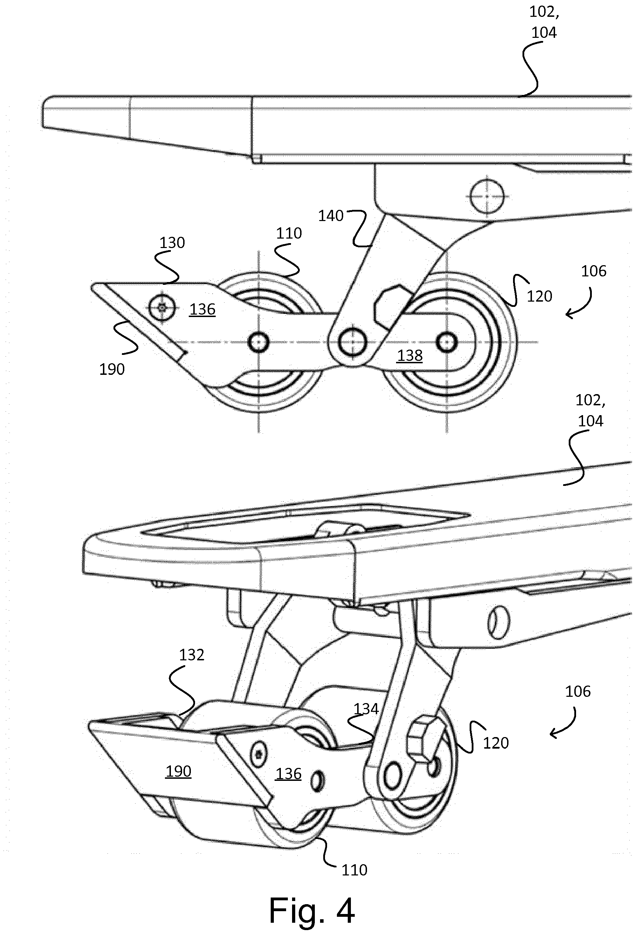

Figure 4 shows two detailed views of a fork 102, 104 on a forklift truck 100 as described in Figure 3, wherein the slide device 130 further comprises a slide plate 190. The slide plate 190 is attached to the angled side 160 of the front parts 136 of the first arm 132 and the second arm 134, such that the slide plate 190 is able to slide on an encountered obstacle. This way, the risk of damaging the encountered obstacle with the angled sides 160 of the first arm 132 and the second arm 134 is minimized. The slide plate 190 preferably comprises the same material as the first arm 132 and the second arm 134, and is preferable exchangeable.

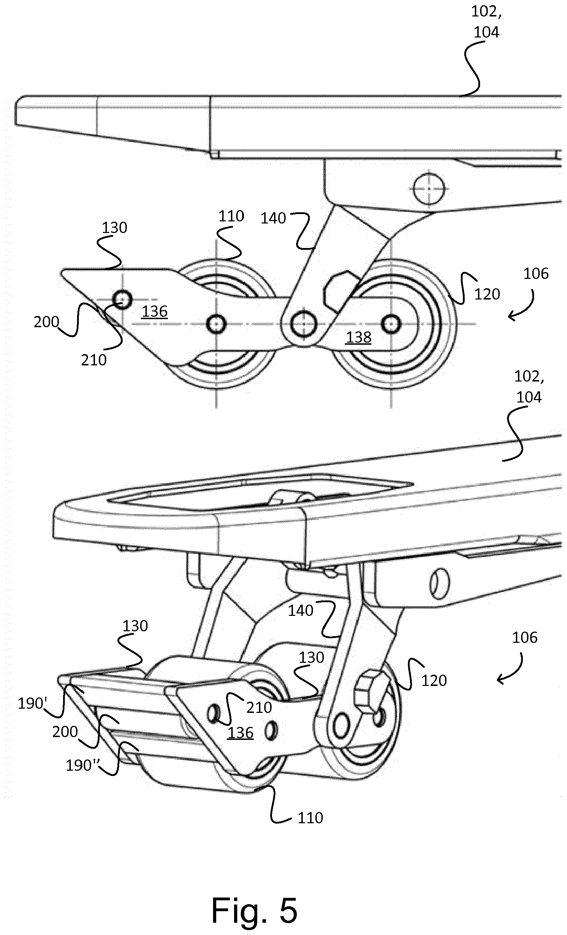

Figure 5 shows two detailed views of a fork 102, 104 on a forklift truck 100 as described in Figure 3, wherein the slide device further comprises a slide wheel 200. In the lower figure, the slide device 130 also comprises two slide plates 190', 190". The slide wheel 200 is arranged with its wheel axle 210 perpendicular to the front part 136 of the first arm 132 and the second arm 134, between the first arm 132 and the second arm 134, such that it is arranged in front of the front wheel 110. The slide wheel 200 is arranged such that is extends beyond the angled sides 160 of the first arm 132 and the second arm 134 and thus may slide/roll on an encountered obstacle. A first slide plate 190' is arranged above the slide wheel 200 at the slide device tip 180 and a second slide plate 190" is arranged below the slide wheel 200 closer to the surface on which the forklift truck 100 is travelling.

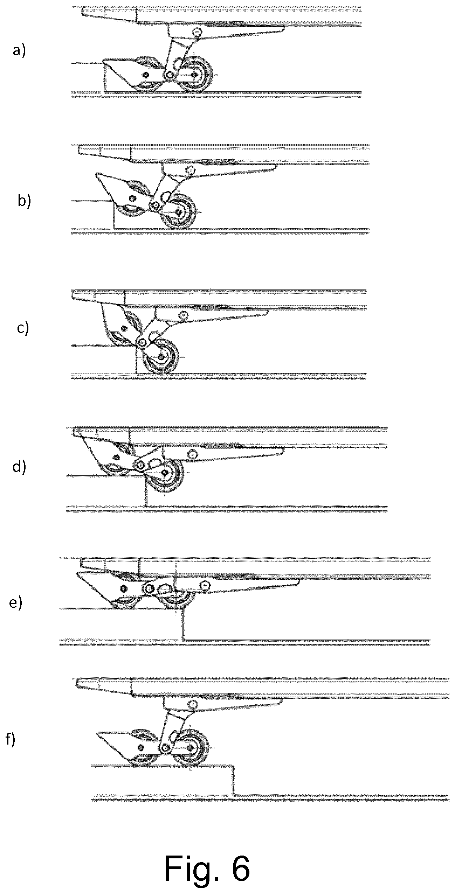

Figure 6 shows a sequence of a forklift truck 100 climbing an encountered obstacle according to an embodiment of the invention. The forklift truck 100 is configured as described in any of figure 3 to figure 5. The sequence includes the stages a-f where stage a shows a situation where the forklift truck 100 with the forks 102, 104 in the raised position has encountered an obstacle. Stage b shows a situation where the slide device 130 is sliding on the obstacle and thereby lifting the front wheel 110. Stage c shows a situation where the slide device 130 has lifted the front wheel 110 onto the obstacle and the front part 136 of the slide device 130 is abutting the underside of the fork 102, 104. The rear wheel 120 is still on the original surface and has not climbed the obstacle. The slide device 130 is thus in an angled position relative to the fork 102, 104. In stage d the fork 102, 104 is lowered towards the lowered position and thus presses the front part 136 of the slide device 130 downwards towards the obstacle. When the front part 136 of the slide device 130 is pressed downwards, the slide device 130 rotates around the front wheel axle 112 and the rear part 138 of the slide device 130 and thus the rear wheel 120 is lifted. The slide device thus acts as a lever in cooperation with the fork 102, 104. In stage e the rear wheel 120 is completely lifted onto the obstacle and the fork 102, 104 is in the lowered position. Finally stage f shows a situation where the fork 102, 104 has been raised to the raised position again and the obstacle is climbed.

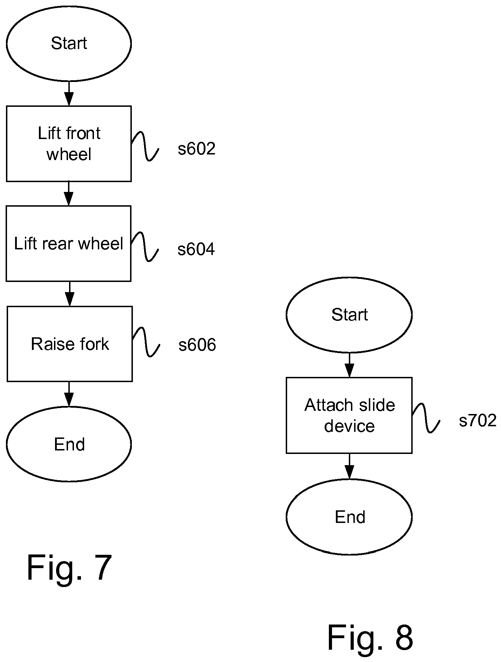

Figure 7 shows a flowchart for a method for climbing an obstacle with a forklift truck 100 according to an embodiment of the invention. The forklift truck 100 comprises at least one fork 102 104, wherein the fork 102, 104 is height adjustable between a lowered position and a raised position and wherein a fork wheel bogie 106 is arranged at the front end 108 of the fork 102, 104, each fork wheel bogie 106 comprising a front wheel 110 and a rear wheel 120. The method comprises the step to lift s602 the front wheel 110 onto the obstacle by means of a slide device 130 attached to the front wheel 110, wherein the slide device 130 extends beyond the front wheel 110 such that it slides on the obstacle and thereby lifts the front wheel 110 onto the obstacle. The method further comprises the step to lift s604 the rear wheel 120 onto the obstacle by means of the slide device 130 acting as a lever in cooperation with the fork 102, 104, such that the rear wheel 120 is lifted onto the obstacle.

The step to lift s604 the rear wheel 120 includes exerting a force downwards on a front part 136 the slide device 130 by lowering the fork 102, 104 to the lowered position. The force downwards is suitably exerted on the front part 136 of the slide device 130, such that the front part 136 is pressed downwards. Since the slide device 130 is attached to the front wheel 110, the slide device 130 is rotated around the front wheel axle 112 when the slide device 130 is pressed downwards. The front wheel 110 and the rear wheel 120 are rigidly connected and the rear wheel 120 is thereby lifted as the slide device 130 is pressed downwards. This way, the slide device 130 acts as a lever in cooperation with the fork 102, 104.

The method preferably comprises the step to raise s606 the fork 102, 104 to the raised position after the rear wheel 120 has been lifted onto the obstacle.

Figure 8 shows a flow chart for a method for modifying a forklift truck 100 according to an embodiment of the invention. The forklift truck 100 comprises at least one fork 102, 104, wherein the fork 102, 104 is height adjustable between a lowered position and a raised position and wherein a fork wheel bogie 106 is arranged at the front end 108 of the fork 102, 104, the fork wheel bogie 106 comprising a front wheel 110 and a rear wheel 120. The method comprises the step to attach s702 a slide device 130 to the front wheel 110, wherein the slide device 130 extends beyond the front wheel 110 and is configured to be able to slide on an encountered obstacle such that the front wheel 110 is lifted onto the obstacle, wherein the slide device 130 is adapted to act as a lever in cooperation with the fork 102, 104, such that the rear wheel 120 may be lifted onto an encountered object.

## Claims

1. A forklift truck (100) comprising at least one fork (102, 104), wherein the fork (102, 104) is height adjustable between a lowered position and a raised position and wherein a fork wheel bogie (106) is arranged at the front end (106) of the fork (102, 104), the fork wheel bogie (106) comprising a front wheel (110) and a rear wheel (120), wherein the fork wheel bogie (106) comprises a linkage (140), which is pivotable in relation to the fork (102, 104) on which the bogie (106) is arranged and wherein the front wheel axle (112) and the rear wheel axle (122) are connected with each other and the pivotable linkage (140), wherein a slide device (130) is attached to the front wheel (110), wherein the slide device (130) extends beyond the front wheel (110) and is configured to be able to slide on an encountered obstacle and thereby lift the front wheel (110) onto the obstacle, **characterized in that** the slide device (130) is adapted to act as a lever in cooperation with the fork (102, 104), such that the rear wheel (120) may be lifted onto the encountered obstacle, wherein the slide device (130) is arranged to act as a lever by abutting the underside of the fork (102, 104) whereby the fork (102, 104), when lowered to the lowered position, exerts a force on a front part (136) of the slide device (130).

2. A forklift truck (100) according to claim 1, wherein the slide device (130) comprises a first arm (132) and a second arm (134), arranged on each side of the front wheel (110).

3. A forklift truck (100) according to claim 2, wherein the first arm (132) and the second arm (134) each has a tapered front part (136) extending beyond the front wheel (110).

4. A forklift truck (100) according to claim 2 or 3, wherein the first arm (132) and the second arm (134) are attached to the rear wheel (120), thus connecting the rear wheel (120) and the front wheel (110).

5. A forklift truck (100) according to any of claim 3-4, wherein a slide plate (190, 190', 190") is arranged between the front part (136) of the first arm (132) and the front part (136) of the second arm (134).

6. A forklift truck (100) according to any of claim 3-5, wherein a slide wheel (200) is arranged between the front part (136) of the first arm (132) and the front part (136) of the second arm (134).

7. A forklift truck (100) according to any of the preceding claims, wherein the forklift truck (100) comprises two forks (102, 104).

8. A method for climbing an obstacle with a forklift truck (100) comprising at least one fork (102, 104), wherein the fork (102, 104) is height adjustable between a lowered position and a raised position and wherein a fork wheel bogie (106) is arranged at the front end (108) of the fork (102, 104), the fork wheel bogie (106) comprising a front wheel (110) and a rear wheel (120), wherein the fork wheel bogie (106) comprises a linkage (140), which is pivotable in relation to the fork (102, 104) on which the bogie (106) is arranged and wherein the front wheel axle (112) and the rear wheel axle (122) are connected with each other and the pivotable linkage (140), the method comprising the step to
- lift (s602) the front wheel (110) onto the obstacle by means of a slide device (130) attached to the front wheel (110), wherein the slide device (130) extends beyond the front wheel (110) such that it slides on the obstacle and thereby lifts the front wheel (110) onto the obstacle; **characterized in** the step to
- lift (s604) the rear wheel (120) onto the obstacle by means of the slide device (130) acting as a lever in cooperation with the fork (102, 104), such that the rear wheel (120) is lifted onto the obstacle, wherein the step includes exerting a force downwards on a front part (136) of the slide device (130) by lowering the fork (102, 104) to the lowered position.

9. A method according to claim 8, further comprising the step to:
- move (s606) the fork (102, 104) to the raised position after the rear wheel (120) has been lifted onto the obstacle.

10. A method for modifying a forklift truck (100) comprising at least one fork (102, 104), wherein the fork (102, 104) is height adjustable between a lowered position and a raised position and wherein a fork wheel bogie (106) is arranged at the front end (106) of the fork (102, 104), the fork wheel bogie (106) comprising a front wheel (110) and a rear wheel (120), wherein the fork wheel bogie (106) comprises a linkage (140), which is pivotable in relation to the fork (102, 104) on which the bogie (106) is arranged and wherein the front wheel axle (112) and the rear wheel axle (122) are connected with each other and the pivotable linkage (140), **characterized in** the step to:
- attach (s702) a slide device (130) to the front wheel (110), wherein the slide device (130) extends beyond the front wheel (110) and is configured to be able to slide on an encountered obstacle and thereby lift the front wheel (110) onto the obstacle, wherein the slide device (130) is adapted to act as a lever in cooperation with the fork (102, 104), such that the rear wheel (120) may be lifted onto the encountered obstacle, wherein the slide device (130) is arranged to act as a lever by abutting the underside of the fork (102, 104) such that the fork (102, 104), when lowered to the lowered position, exerts a force on a front part (136) of the slide device (130).

## Patentansprüche

1. Gabelstapler (100) umfassend mindestens eine Gabel (102, 104), wobei die Gabel (102, 104) zwischen einer abgesenkten Position und einer angehobenen Position höhenverstellbar ist, und wobei ein Gabelraddrehgestell (106) am Vorderende (106) der Gabel (102, 104) angeordnet ist, welches Gabelraddrehgestell (106) ein Vorderrad (110) und ein Hinterrad (120) umfasst, wobei das Gabelraddrehgestell (106) eine Anlenkung (140) umfasst, die in Bezug auf die Gabel (102, 104) drehbar ist, auf der das Drehgestell (106) angeordnet ist, und wobei die Vorderradachse (112) und die Hinterradachse (122) miteinander und derdrehbaren Anlenkung (140) verbunden sind, wobei eine Gleitvorrichtung (130) am Vorderrad (110) befestigt ist, wobei sich die Gleitvorrichtung (130) über das Vorderrad (110) hinaus erstreckt und so gestaltet ist, dass sie auf einem angetroffenen Hindernis gleiten und dadurch das Vorderrad (110) auf das Hindernis anheben kann, **dadurch gekennzeichnet, dass** die Gleitvorrichtung (130) so ausgelegt ist, dass sie als ein Hebel in Zusammenwirkung mit der Gabel (102, 104) fungiert, so dass das Hinterrad (120) auf das angetroffene Hindernis anhebbar ist, wobei die Gleitvorrichtung (130) so angeordnet ist, dass sie durch Anstoßen an die Unterseite der Gabel (102, 104) als ein Hebel fungiert, wobei die Gabel (102, 104) beim Absenken in die untere Position eine Kraft auf einen Vorderteil (136) der Gleitvorrichtung (130) ausübt.

2. Gabelstapler (100) nach Anspruch 1, wobei die Gleitvorrichtung (130) einen ersten Arm (132) und einen zweiten Arm (134) umfasst, die auf jeder Seite des Vorderrades (110) angeordnet sind.

3. Gabelstapler (100) nach Anspruch 2, wobei der erste Arm (132) und der zweite Arm (134) jeweils einen, sich über das Vorderrad (110) hinaus erstreckenden, verjüngten Vorderteil (136) aufweisen.

4. Gabelstapler (100) nach Anspruch 2 oder 3, wobei der erste Arm (132) und der zweite Arm (134) am Hinterrad (120) befestigt sind, wodurch das Hinterrad (120) und das Vorderrad (110) verbunden werden.

5. Gabelstapler (100) nach einem der Ansprüche 3 bis 4, wobei eine Gleitplatte (190, 190', 190") zwischen dem Vorderteil (136) des ersten Arms (132) und dem Vorderteil (136) des zweiten Arms (134) angeordnet ist.

6. Gabelstapler (100) nach einem der Ansprüche 3 bis 5, wobei ein Gleitrad (200) zwischen dem Vorderteil (136) des ersten Arms (132) und dem Vorderteil (136) des zweiten Arms (134) angeordnet ist.

7. Gabelstapler (100) nach einem der vorhergehenden Ansprüche, wobei der Gabelstapler (100) zwei Gabeln (102, 104) umfasst.

8. Verfahren zum Befahren eines Hindernisses mit einem Gabelstapler (100) umfassend mindestens eine Gabel (102, 104), wobei die Gabel (102, 104) zwischen einer abgesenkten Position und einer angehobenen Position höhenverstellbar ist, und wobei ein Gabelraddrehgestell (106) am Vorderende (108) der Gabel (102, 104) angeordnet ist, welches Gabelraddrehgestell (106) ein Vorderrad (110) und ein Hinterrad (120) umfasst, wobei das Gabelraddrehgestell (106) eine Anlenkung (140) umfasst, die in Bezug auf die Gabel (102, 104) drehbar ist, auf der das Drehgestell (106) angeordnet ist, und wobei die Vorderradachse (112) und die Hinterradachse (122) miteinander und der drehbaren Anlenkung (140) verbunden sind, welches Verfahren den folgenden Schritt umfasst:
- Anheben (s602) des Vorderrades (110) auf das Hindernis mittels einer auf dem Vorderrad (110) befestigten Gleitvorrichtung (130), wobei sich die Gleitvorrichtung (130) über das Vorderrad (110) hinaus erstreckt, so dass sie auf dem Hindernis gleitet und dadurch das Vorderrad (110) auf das Hindernis anhebt; **gekennzeichnet durch** den folgenden Schritt
- Anheben (s604) des Hinterrades (120) auf das Hindernis mittels der als ein Hebel in Zusammenwirkung mit der Gabel (102, 104) fungierenden Gleitvorrichtung (130), so dass das Hinterrad (120) auf das Hindernis angehoben wird, wobei der Schritt das Ausüben einer Kraft nach unten auf einen Vorderteil (136) der Gleitvorrichtung (130) durch Absenken der Gabel (102, 104) in die abgesenkte Position umfasst.

9. Verfahren nach Anspruch 8, weiter umfassend den folgenden Schritt:
- Bewegen (s606) der Gabel (102, 104) in eine angehobene Position, nachdem das Hinterrad (120) auf das Hindernis angehoben wurde.

10. Verfahren zum Modifizieren eines Gabelstaplers (100) umfassend mindestens eine Gabel (102, 104), wobei die Gabel (102, 104) zwischen einer abgesenkten Position und einer angehobenen Position höhenverstellbar ist, und wobei ein Gabelraddrehgestell (106) am Vorderende (106) der Gabel (102, 104) angeordnet ist, welches Gabelraddrehgestell (106) ein Vorderrad (110) und ein Hinterrad (120) umfasst, wobei das Gabelraddrehgestell (106) eine Anlenkung (140) umfasst, die in Bezug auf die Gabel (102, 104) drehbar ist, auf der das Drehgestell (106) angeordnet ist, und wobei die Vorderradachse (112) und die Hinterradachse (122) miteinander und der drehbaren Anlenkung (140) verbunden sind, **gekennzeichnet durch den folgenden Schritt:**
- Befestigen (s702) einer Gleitvorrichtung (130) am Vorderrad (110), wobei sich die Gleitvorrichtung (130) über das Vorderrad (110) hinaus erstreckt und so gestaltet ist, dass sie auf einem angetroffenen Hindernis gleiten und dadurch das Vorderrad (110) auf das Hindernis anheben kann, wobei die Gleitvorrichtung (130) so ausgelegt ist, dass sie als ein Hebel in Zusammenwirkung mit der Gabel (102, 104) fungiert, so dass das Hinterrad (120) auf das angetroffene Hindernis anhebbar ist, wobei die Gleitvorrichtung (130) so angeordnet ist, dass sie durch Anstoßen an die Unterseite der Gabel (102, 104) als ein Hebel fungiert, so dass die Gabel (102, 104) beim Absenken in die untere Position eine Kraft auf einen Vorderteil (136) der Gleitvorrichtung (130) ausübt.

## Revendications

1. Chariot élévateur à fourche (100) comprenant au moins une fourche (102, 104), la fourche (102, 104) étant réglable en hauteur entre une position abaissée et une position surélevée, et dans lequel un bogie de roue à fourche (106) est disposé à l'avant extrémité (106) de la fourche (102, 104), le bogie de roue à fourche (106) comprenant une roue avant (110) et une roue arrière (120), dans lequel le bogie de roue à fourche (106) comprend une liaison (140), qui peut pivoter par rapport à la fourche (102, 104) sur laquelle le bogie (106) est arrangé, et dans lequel l'essieu de roue avant (112) et l'essieu de roue arrière (122) sont reliés l'un à l'autre et à la liaison à pivotement (140), dans lequel un dispositif coulissant (130) est fixé à la roue avant (110), dans lequel le dispositif coulissant (130) s'étend au-delà de la roue avant (110) et est configuré pour pouvoir glisser sur un obstacle rencontré et ainsi soulever la roue avant (110) sur l'obstacle, **caractérisé en ce que** le dispositif coulissant (130) est adapté pour agir en tant que levier en coopération avec la fourche (102, 104), si bien que la roue arrière (120) peut être levée sur l'obstacle rencontré, dans lequel le dispositif coulissant (130) est adapté pour agir en tant que levier en s'appuyant sur la face inférieure de la fourche (102, 104), la fourche (102, 104), étant abaissée vers la position abaissée, exerçant une force sur une partie avant (136) du dispositif coulissant (130).

2. Chariot élévateur à fourche (100)selon la revendication 1, dans lequel le dispositif coulissant (130) comprend un premier bras (132) et un deuxième bras (134), disposés de chaque côté de la roue avant (110).

3. Chariot élévateur à fourche (100) selon la revendication 2, dans lequel le premier bras (132) et le deuxième bras (134) ont chacun une partie avant conique (136) s'étendant au-delà de la roue avant (110).

4. Chariot élévateur à fourche (100) selon la revendication 2 ou 3, dans lequel le premier bras (132) et le deuxième bras (134) sont fixés à la roue arrière (120), reliant ainsi la roue arrière (120) et la roue avant (110).

5. Chariot élévateur à fourche (100) selon l'une quelconque des revendications 3 à 4, dans lequel une plaque coulissante (190, 190', 190") est agencée entre la partie avant (136) du premier bras (132) et la partie avant (136) du deuxième bras (134).

6. Chariot élévateur à fourche (100) selon l'une quelconque des revendications 3 à 5, dans lequel une roue coulissante (200) est agencée entre la partie avant (136) du premier bras (132) et la partie avant (136) du deuxième bras (134).

7. Chariot élévateur à fourche (100) selon l'une quelconque des revendications précédentes, dans lequel le chariot élévateur à fourche (100) comprend deux fourches (102, 104).

8. Procédé pour grimper un obstacle avec un chariot élévateur à fourche (100) comprenant au moins une fourche (102, 104), la fourche (102, 104) étant réglable en hauteur entre une position abaissée et une position surélevée, et dans lequel un bogie de roue à fourche (106) est disposé à l'avant extrémité (108) de la fourche (102, 104), le bogie de roue à fourche (106) comprenant une roue avant (110) et une roue arrière (120), dans lequel le bogie de roue à fourche (106) comprend une liaison (140), qui peut pivoter par rapport à la fourche (102, 104) sur laquelle le bogie (106) est arrangé, et dans lequel l'essieu de roue avant (112) et l'essieu de roue arrière (122) sont reliés l'un à l'autre et à la liaison à pivotement (140), le procédé comprenant les étapes consistant à :
- soulever (s602) la roue avant (110) sur l'obstacle au moyen d'un dispositif coulissant (130)fixé à la roue avant (110), dans lequel le dispositif coulissant (130)s'étend au-delà de la roue avant (110) de manière à coulisser l'obstacle et soulever ainsi la roue avant (110) sur l'obstacle ;
**caractérisé par** l'étape consistant à
- soulever (s604) la roue arrière (120) sur l'obstacle au moyen du dispositif coulissant (130) agissant en tant que levier en coopération avec la fourche (102, 104), si bien que la roue arrière (120) est levée sur l'obstacle, l'étape comprenant le fait d'exercer une force vers le bas sur une partie avant (136) du dispositif coulissant (130) en abaissant la fourche (102, 104) à la position abaissée.

9. Procédé selon la revendication 8, comprenant en outre l'étape consistant à :
- déplacer (s606) la fourche (102, 104) dans la position relevée après que la roue arrière (120) a été levée sur l'obstacle.

10. Procédé de modification d'un chariot élévateur à fourche (100) comprenant au moins une fourche (102, 104), la fourche (102, 104) étant réglable en hauteur entre une position abaissée et une position surélevée, et dans lequel un bogie de roue à fourche (106) est disposé à l'avant extrémité (106) de la fourche (102, 104), le bogie de roue à fourche (106) comprenant une roue avant (110) et une roue arrière (120), dans lequel le bogie de roue à fourche (106) comprend une liaison (140), qui peut pivoter par rapport à la fourche (102, 104) sur laquelle le bogie (106) est arrangé, et dans lequel l'essieu de roue avant (112) et l'essieu de roue arrière (122) sont reliés l'un à l'autre et à la liaison à pivotement (140), **caractérisé par** l'étape consistant à :
- attacher (s702) un dispositif coulissant (130) à la roue avant (110), dans lequel le dispositif coulissant (130) s'étend au-delà de la roue avant (110) et est configuré pour pouvoir glisser sur un obstacle rencontré et ainsi soulever la roue avant (110) sur l'obstacle, dans lequel le dispositif coulissant (130) est adapté pour agir en tant que levier en coopération avec la fourche (102, 104), si bien que la roue arrière (120) peut être levée sur l'obstacle rencontré, dans lequel le dispositif coulissant (130) est adapté pour agir en tant que levier en s'appuyant sur la face inférieure de la fourche (102, 104), la fourche (102, 104), étant abaissée vers la position abaissée, exerçant une force sur une partie avant (136) du dispositif coulissant (130).
